(19)

Europäisches
Patentamt
European
Patent Office
Office européen
des brevets

(11) **EP 3 553 692 A1**

(12) **EUROPEAN PATENT APPLICATION**
published in accordance with Art. 153(4) EPC

(43) Date of publication:
**16.10.2019 Bulletin 2019/42**

(21) Application number: **16923431.7**

(22) Date of filing: **09.12.2016**

(51) Int Cl.:
***G06K 9/00*** *(2006.01)*

(86) International application number:
**PCT/CN2016/109228**

(87) International publication number:
**WO 2018/103072 (14.06.2018 Gazette 2018/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Shenzhen Royole Technologies Co.,
Ltd.
Shenzhen, Guangdong 518052 (CN)**

(72) Inventor: **ZHAO, Cong
Shenzhen
Guangdong 518052 (CN)**

(74) Representative: **Hamer, Christopher K. et al
Mathys & Squire LLP
The Shard
32 London Bridge Street
London SE1 9SG (GB)**

(54) **ADJUSTMENT METHOD AND ADJUSTMENT SYSTEM FOR USER INTERFACE, AND
HEAD-MOUNTED DISPLAY DEVICE**

(57) A method and a system for adjusting a user interface of a head-mounted display (HMD) are provided. The HMD is provided with a distance sensor and a display unit, where the distance sensor is configured to detect a distance between a user and the HMD and the display unit is configured to display a user interface for interacting with the user. The method includes the following. A determination may be made whether the HMD is in a screen locked state. A screen locked interface displayed by the display unit is adjusted according to the distance detected by the distance sensor when the HMD is in the screen locked state. And the display unit is controlled to display an adjusted user interface. Thus, the method for adjusting the user interface of the HMD according to the present disclosure, are capable of adjusting the user interface displayed according to the distance between the HMD and the user when the user interface is in the screen locked state, facilitating the user's use.

FIG. 3

EP 3 553 692 A1

## Description

TECHNICAL FIELD

This disclosure relates to the field of head-mounted displays, and more particularly to a method and a system for adjusting a user interface of a head-mounted display.

BACKGROUND

With the development of head-mounted display technology and virtual display technology, head-mounted display (HMD) has been accepted by more and more users. Since a display screen is wrapped inside the HMD, when in use, the HMD needs to be worn on a user's head. However, the user is unable to see the actual keyboard when wearing the HMD. Therefore, the user is unable to control the HMD in a manner similar to that of operating a PC (personal computer) by a physical mouse or controlling a mobile phone by a touch screen while wearing the HMD.

In order to ensure information security, the HMD will be in a screen locked state when the HMD has not been used for a period of time or the HMD is turned on. When unlocking the screen of the HMD, the user often needs to remove the HMD from his/her head, then view what is displayed on the screen from eyepieces of the HMD, and perform corresponding operations according to contents as viewed.

However, when the HMD is removed from the user's head, the size of the graphical user interface viewed by the user from the eyepieces is smaller than that viewed with the HMD worn on the head. Therefore, it is harder for the user to discern and inconvenient for the user to operate.

SUMMARY

In view of the above, a method and a system for adjusting a user interface of a head-mounted display (HMD) are provided so as to adjust the user interface of the HMD according to a distance between a user and the HMD, thereby allowing the user to view an appropriate user interface and facilitating corresponding operations to be applied.

In order to achieve the above purpose, in a first aspect of the present disclosure, there is provided a method for adjusting a user interface, which is applicable to a head-mounted display (HMD). The HMD is provided with a distance sensor and a display unit, where the distance sensor is configured to detect a distance between a user and the HMD and the display unit is configured to display a user interface for interacting with the user. The method includes the following. A determination is made whether the user interface of the HMD is in a screen locked state. A screen locked interface displayed by the display unit is adjusted according to the distance detected by the distance sensor when the user interface of the HMD is in the screen locked state. And the display unit is controlled to display an adjusted user interface.

In a second aspect of the present disclosure, there is provided a system for adjusting a user interface, which is applicable to a head-mounted display (HMD). The HMD is provided with a distance sensor and a display unit, where the distance sensor is configured to detect a distance between a user and the HMD and the display unit is configured to display a user interface for interacting with the user. The system includes a determining module, an adjusting module, and a display control module. The determining module is configured to determine whether the user interface displayed by the HMD is in a screen locked state. The adjusting module is configured to adjust a screen locked interface displayed by the display unit according to the distance detected by the distance sensor when the user interface of the HMD is in the screen locked state. And the display control module is configured to control the display unit to display an adjusted user interface.

In a third aspect of the present disclosure, there is provided a head-mounted display (HMD), which includes a distance sensor and a display unit. The distance sensor is configured to detect a distance between a user and the HMD and the display unit is configured to display a user interface for interacting with the user. The HMD further includes a system for adjusting the user interface. The system includes a determining module, an adjusting module, and a display control module. The determining module is configured to determine whether the user interface displayed by the HMD is in a screen locked state. The adjusting module is configured to adjust a screen locked interface displayed by the display unit according to the distance detected by the distance sensor when the user interface of the HMD is in the screen locked state. And the display control module is configured to control the display unit to display an adjusted user interface.

Compared with the related art, the method and the system for adjusting the user interface of the head-mounted display (HMD) according to embodiments of the present disclosure, are capable of adjusting the user interface displayed according to the distance between the HMD and the user when the user interface displayed by the HMD is in the screen locked state, facilitating the user to view the corresponding interface and apply corresponding operations to provide user convenience.

BRIEF DESCRIPTION OF THE DRAWINGS

The following detailed description of embodiments refers to the accompanying drawings, which illustrate specific embodiments of the disclosure. It should be understood that elements illustrated in the drawings do not represent actual size and scale relationships, and are not intended to be construed as a limitation of the present disclosure.

FIG. 1 is a schematic diagram illustrating hardware modules in a head-mounted display according to an embodiment of the present disclosure.

FIG. 2 is a schematic diagram illustrating functional modules of a system for adjusting a user interface of the head-mounted display illustrated in FIG. 1 according to an embodiment of the present disclosure.

FIG. 3 is a flow chart illustrating a method for adjusting a user interface of a head-mounted display according to an embodiment of the present disclosure.

## DETAILED DESCRIPTION OF ILLUSTRATED EMBODIMENTS

To provide a better understanding of objects, technical solutions, and advantages of the present disclosure, various implementations of the disclosure will be described below in further detail with reference to the accompanying drawings. It should be understood that the specific embodiments described herein are only used to explain the present disclosure and are not intended to limit the present disclosure.

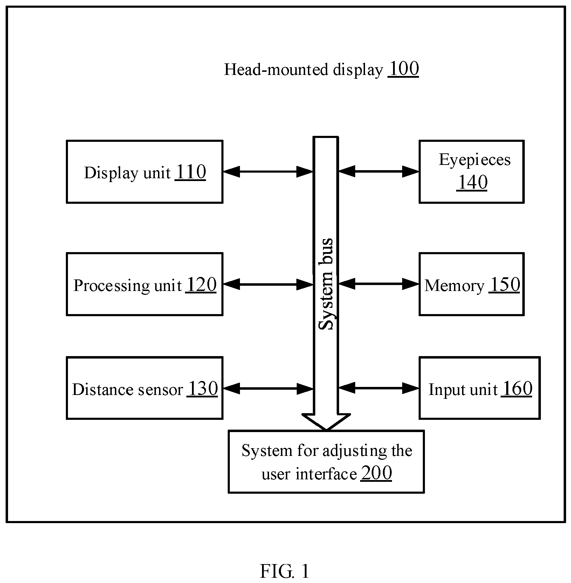

FIG. 1 is a schematic diagram illustrating hardware modules in a head-mounted display (HMD) 100 according to an embodiment of the present disclosure. The HMD 100 includes a display unit 110, a processing unit 120, a distance sensor 130, and eyepieces 140.

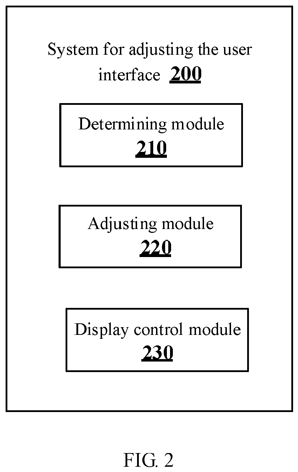

The display unit 110 and the distance sensor 130 are electrically connected with the processing unit 120. In this implementation, the display unit 110 may be a flexible display screen. The distance sensor 130 may be an infrared sensor disposed on the HMD 100 facing a user's face. The distance sensor 130 is configured to detect a distance of the HMD 100 from a user. In another implementation, the distance sensor 130 is an eyeball sensor. The distance sensor 130 is disposed at a position where an eyepiece hole (not shown) of the HMD 100 is located, and configured to detect a distance between the eyepieces 140 of the HMD 100 and the user's eyes. The processing unit 120 is configured to control a system 200 for adjusting a user interface (referring to FIG. 2, hereinafter referred to as an adjustment system 200 for short). The processing unit 120 may include an integrated circuit (IC), for example, may include a single packaged IC, or may include a plurality of connected packaged ICs with the same function or different functions. For instance, the processing unit 120 may only include a central processing unit (CPU), or may be a combination of a CPU, a digital signal processor (DSP), a graphic processing unit (GPU), and various control chips. In embodiments of the present disclosure, the CPU may have a single operation core, and may also have a multi-operation core.

In another implementation, the HMD 100 further includes a memory 150 and an input unit 160. The memory 150 may be a memory built in the HMD 100 itself, or may be an external storage device such as a secure digital card, a smart media card, or a flash memory card, for storing program codes and data of the adjustment system 200. The input unit 160 is configured to receive an input operation of the user and generate a corresponding instruction in response to the input operation, for example, inputting an instruction for conducting an unlock operation or an interface magnifying operation into an interface displayed by the display unit 110.

FIG. 2 is a schematic diagram illustrating functional modules of the system 200 for adjusting the user interface (hereinafter referred to as an adjustment system 200 for short) illustrated in FIG. 1 according to an embodiment of the present disclosure. The adjustment system 200 includes a determining module 210, an adjusting module 220, and a display control module 230. It should be noted that the modules referred to in the present disclosure are subroutine instruction segments that can be executed by the processing unit 120 of the HMD 100 and achieve specific functions. Hereinafter, the specific functions of each functional module will be described in detail.

The determining module 210 is configured to determine a current state of the HMD 100. The current state of the HMD 100 includes a screen locked state and a screen unlocked state. In this implementation, the determining module 210 is configured to determine whether the HMD 100 is in the screen locked state currently.

As an implementation, the determining module 210 is configured to determine if the current state of the HMD 100 is the screen locked state or the screen unlocked state by determining whether the user interface displayed by the display unit 110 includes a lock screen icon or a lock screen text (such as "sliding to unlock"). When the user interface displayed by the display unit 110 includes a lock screen icon or/and a lock screen text, the determining module 210 determines that the HMD 100 is currently in the screen locked state. On the other hand, when the user interface displayed by the display unit 110 does not include a lock screen icon or a lock screen text, the determining module 210 determines that the HMD 100 is currently in the screen unlocked state.

When the HMD 100 is in the screen locked state, the display unit 110 displays a user interface of lock screen (that is, a screen locked interface). The user interface of lock screen includes a lock screen icon or/and a lock screen text. When the HMD 100 is in the screen unlocked state, the display unit 110 displays a main interface or an application interface of an application.

When the HMD 100 is in the screen locked state, the adjusting module 220 adjusts the screen locked interface displayed by the display unit 110 according to the distance detected by the distance sensor 130.

In an implementation, the adjusting module 220 is configured to determine whether the distance detected by the distance sensor 130 is greater than a first preset value and less than a second preset value. The first preset value is equal to the distance between the eyepieces 140 of the HMD 100 and the user's eyes when the HMD 100 is worn. The first preset value is, for example, 2 cm. The second preset value is equal to the distance between the user (or the user's eyes) and the HMD 100 (or the eyepieces 140 of the HMD 100) when the HMD 100 is taken off and contents (for example, the user interface) displayed by the display unit 110 may not be clearly visible to the user through the eyepieces 140. The second preset value is, for example, 10 cm. The first preset value can be obtained by separately measuring a distance between each of a plurality of users and the HMD 100, when the plurality of users wear the HMD 100 individually. The second preset value can be obtained by separately measuring a distance between each of a plurality of users and the HMD 100, when the plurality of users remove the HMD 100 individually and the contents displayed by the display unit 110 may not be clearly visible to the users through the eyepieces 140.

When the distance detected by the distance sensor 130 is greater than the first preset value and less than the second preset value, the adjusting module 220 magnifies the screen locked interface displayed by the display unit 110. In an implementation, the adjusting module 220 is configured to magnify a lock screen icon or/and a lock screen text on the screen locked interface displayed by the display unit 110. In other implementations, the adjusting module 220 configured to magnify the screen locked interface displayed by the display unit 110, is configured to: calculate a ratio of the distance detected by the distance sensor 130 to a preset value and determine a magnifying coefficient of the screen locked interface according to the ratio, where the magnifying coefficient is equal to the ratio. That is, assuming that a preset value of the distance is D, and in the screen locked state, the size of the screen locked interface displayed by the display unit 110 is S. When a value of the distance detected by the distance sensor 130 is D1 (D1 is greater than the first preset value and less than the second preset value) and D1>D, the adjusting module 220 magnifies the screen locked interface, where the size of the screen locked interface magnified is S1, with S1=D1*S/D.

In another implementation, the adjusting module 220 is configured to determine whether the distance detected by the distance sensor 130 is equal to the first preset value. When the distance detected by the distance sensor 130 is equal to the first preset value, the adjusting module 220 determines that the HMD 100 has been mounted to the user's head and unlocks the screen locked interface displayed by the display unit 110.

The display control module 230 controls the display unit 110 to display the screen locked interface adjusted by the adjusting module 220.

As an implementation, when the distance detected by the distance sensor 130 is greater than the first preset value and less than the second preset value, the display control module 230 controls the display unit 110 to display the screen locked interface magnified. Otherwise, when the distance detected by the distance sensor 130 is equal to the first preset value, the display control module 230 controls the display unit 110 to display a screen unlocked interface (that is, an interface in the screen unlocked state or an unlocked user interface).

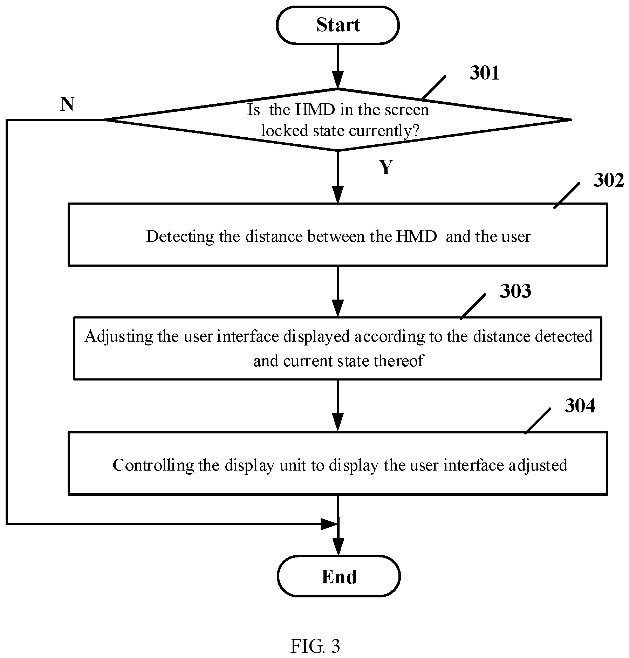

FIG. 3 is a flow chart illustrating a method for adjusting a user interface of a head-mounted display according to an embodiment of the present disclosure. The sequence of blocks in the flow chart can be changed, and some blocks can be omitted.

At block 301, the determining module 210 may determine whether the user interface displayed by the HMD 100 is in the screen locked state.

If yes, the method may advance to block 302.

Otherwise, end the process.

As an implementation, the determining module 210 may determine if the current state of the HMD 100 is the screen locked state or the screen unlocked state by determining whether the user interface displayed by the display unit 110 includes a lock screen icon or a lock screen text (such as "sliding to unlock"). When the user interface displayed by the display unit 110 includes a lock screen icon or/and a lock screen text, the determining module 210 may determine that the HMD 100 is currently in the screen locked state. On the other hand, when the user interface displayed by the display unit 110 does not include a lock screen icon or a lock screen text, the determining module 210 may determine that the HMD 100 is currently in the screen unlocked state.

When the HMD 100 is in the screen locked state, the display unit 110 may display a user interface of lock screen (that is, a screen locked interface). The user interface of lock screen includes a lock screen icon or/and a lock screen text. When the HMD 100 is in the screen unlocked state, the display unit 110 may display a main interface or an application interface of an application.

At block 302, the distance sensor 130 may detect the distance between the HMD 100 and the user.

In this implementation, the distance sensor 130 is an eyeball sensor. The distance sensor 130 is disposed at a position where an eyepiece hole (not shown) of the HMD 100 is located, and configured to detect a distance between the eyepieces 140 of the HMD 100 and the user's eyes.

At block 303, the adjusting module 220 may adjust the user interface displayed by the display unit 110 according to the distance detected by the distance sensor 130.

In an implementation, the adjusting module 220 may determine whether the distance detected by the distance sensor 130 is greater than a first preset value and less than a second preset value, or whether the distance is equal to or less than the first preset value. The first preset value is equal to the distance between the eyepieces 140 of the HMD 100 and the user's eyes when the HMD 100 is worn. The first preset value is, for example, 2 cm. The second preset value is equal to the distance between the user (or the user's eyes) and the HMD 100 (or the eyepieces 140 of the HMD 100) when the HMD 100 is removed and contents displayed by the display unit 110 may not be clearly visible to the user through the eyepieces 140. The second preset value is, for example, 10 cm.

When the HMD 100 is currently in the screen locked state and the distance detected by the distance sensor 130 is greater than the first preset value and less than the second preset value, the adjusting module 220 may magnify the screen locked interface displayed by the display unit 110. In other implementations, the adjusting module 220 may only magnify a lock screen icon or/and a lock screen text on the screen locked interface displayed by the display unit 110.

When the HMD 100 is currently in the screen unlocked state and the distance detected by the distance sensor 130 is equal to or less than the first preset value, the adjusting module 220 may unlock the screen locked interface displayed by the display unit 110.

In an implementation, the adjusting module 220 may magnify the screen locked interface displayed by the display unit 110 as follows. A ratio of the distance detected by the distance sensor 130 to a preset value may be calculated, a magnifying coefficient of the screen locked interface may be determined according to the ratio, where the magnifying coefficient is equal to the ratio. That is, assuming that a preset value of the distance is D, and in the screen locked state, the size of the screen locked interface displayed by the display unit 110 is S. When a value of the distance detected by the distance sensor 130 is D1 (D1 is greater than the first preset value and less than the second preset value) and D1>D, the adjusting module 220 may magnify the screen locked interface, and the size of the screen locked interface magnified is S1, with

$$S1=D1*S/D.$$

At block 304, the display control module 230 may control the display unit 110 to display the user interface adjusted by the adjusting module 220.

As an implementation, the display control module 230 may control the display unit 110 to display the user interface adjusted by the adjusting module 220 as follows. The display control module 230 may control the display unit 110 to display the screen locked interface magnified, or to display the user interface in a screen unlocked state (that is, an unlocked user interface).

Compared with the related art, the method and the system for adjusting the user interface of the head-mounted display according to the implementations of the present disclosure, are capable of adjusting the user interface of the HMD and displaying the user interface adjusted according to the current state of the user interface of the HMD and the distance between the HMD and the user. For example, when the user interface is in the screen locked state, and the distance between the HMD and the user is greater than the first preset value and less than the second preset value, the system may magnify the user interface in the screen locked state and display the user interface magnified in the screen locked state. Thus, a lock screen icon or/and a lock screen text, on the user interface in the screen locked state, is clearly visible to the user, facilitating corresponding operations applied by the user.

The aforesaid embodiments are only preferred embodiments of the present application, and are not intended for limiting the present application. Any modification, equivalent replacement, improvement, and so on, which are made within the spirit and the principle of the present application, should be included in the protection scope of the present disclosure.

**Claims**

1. A method for adjusting a user interface, applicable to a head-mounted display (HMD) with a distance sensor and a display unit, wherein the distance sensor is configured to detect a distance between a user and the HMD and the display unit is configured to display a user interface for interacting with the user; the method comprising:

    determining whether the user interface of the HMD is in a screen locked state;
    adjusting a screen locked interface displayed by the display unit according to the distance detected by the distance sensor when the user interface of the HMD is in the screen locked state; and
    controlling the display unit to display an adjusted user interface.

2. The method of claim 1, wherein the adjusting a screen locked interface displayed by the display unit according to the distance detected by the distance sensor comprises:

    determining whether the distance detected by the distance sensor is greater than a first preset value and less than a second preset value; and
    magnifying the screen locked interface displayed by the display unit based on a determination that the distance is greater than the first preset value and less than the second preset value;

    the controlling the display unit to display an adjusted user interface comprises:
    controlling the display unit to display a magnified screen unlocked interface.

3. The method of claim 2, wherein the magnifying the screen locked interface displayed by the display unit comprises:

calculating a ratio of the distance detected by the distance sensor to a preset value; and determining a magnifying coefficient of the screen locked interface according to the ratio; wherein the magnifying coefficient is equal to the ratio.

4. The method of claim 1, wherein
the adjusting a screen locked interface displayed by the display unit according to the distance detected by the distance sensor comprises:

determining whether the distance detected by the distance sensor is equal to or less than a first preset value; and
unlocking the screen locked interface displayed by the display unit based on a determination that the distance is equal to or less than the first preset value;

the controlling the display unit to display an adjusted user interface comprises:
controlling the display unit to display an unlocked user interface.

5. The method of claim 1, wherein the distance sensor is an eyeball sensor, and is configured to detect the distance from the HMD to the eyes of the user.

6. A system for adjusting a user interface, applicable to a head-mounted display (HMD) with a distance sensor and a display unit, wherein the distance sensor is configured to detect a distance between a user and the HMD and the display unit is configured to display a user interface for interacting with the user; the system comprising:

a determining module, configured to determine whether the user interface displayed by the HMD is in a screen locked state;
an adjusting module, configured to adjust a screen locked interface displayed by the display unit according to the distance detected by the distance sensor when the user interface is in the screen locked state; and
a display control module, configured to control the display unit to display an adjusted user interface.

7. The system of claim 6, wherein the adjusting module configured to adjust the screen locked interface displayed by the display unit according to the distance detected by the distance sensor, is configured to:

determine whether the distance detected by the distance sensor is greater than a first preset value and less than a second preset value; and
magnify the screen locked interface displayed by the display unit based on a determination that the distance is greater than the first preset value and less than the second preset value;

wherein the display control module is configured to display a magnified screen unlocked interface.

8. The system of claim 7, wherein the adjusting module configured to magnify the screen locked interface displayed by the display unit, is configured to:

calculate a ratio of the distance detected by the distance sensor to a preset value; and
determine a magnifying coefficient of the screen locked interface according to the ratio; wherein the magnifying coefficient is equal to the ratio.

9. The system of claim 1, wherein the adjusting module is configured to:

determine whether the distance detected by the distance sensor is equal to or less than a first preset value; and
unlock the screen locked interface displayed by the display unit based on a determination that the distance is equal to or less than the first preset value;
wherein the display unit is configured to display an unlocked user interface.

10. The system of claim 1, wherein the distance sensor is an eyeball sensor, and is configured to detect the distance from the HMD to the eyes of the user.

11. A head-mounted display (HMD), provided with a distance sensor and a display unit, wherein the distance sensor is configured to detect a distance between a user and the HMD and the display unit is configured to display a user interface for interacting with the user, wherein the HMD further comprises a system for adjusting the user interface, and the system comprises:

a determining module, configured to determine whether the user interface displayed by the HMD is in a screen locked state;
an adjusting module, configured to adjust a screen locked interface displayed by the display unit according to the distance detected by the distance sensor when the user interface of the HMD is in the screen locked state; and
a display control module, configured to control the display unit to display an adjusted user interface.

12. The HMD of claim 11, wherein the adjusting module configured to adjust the screen locked interface displayed by the display unit according to the distance detected by the distance sensor, is configured to:

determine whether the distance detected by the distance sensor is greater than a first preset value and less than a second preset value; and magnify the screen locked interface displayed by the display unit based on a determination that the distance is greater than the first preset value and less than the second preset value; wherein the display control module is configured to display a magnified screen unlocked interface.

13. The HMD of claim 12, wherein the adjusting module configured to magnify the screen locked interface displayed by the display unit, is configured to:

calculate a ratio of the distance detected by the distance sensor to a preset value; and determine a magnifying coefficient of the screen locked interface according to the ratio; wherein the magnifying coefficient is equal to the ratio.

14. The HMD of claim 11, wherein the adjusting module is configured to:

determine whether the distance detected by the distance sensor is equal to or less than a first preset value; and unlock the screen locked interface displayed by the display unit based on a determination that the distance is equal to or less than the first preset value; wherein the display unit is configured to display an unlocked user interface.

15. The HMD of claim 11, wherein the distance sensor is an eyeball sensor, and is configured to detect the distance from the HMD to the eyes of the user.

Head-mounted display 100

Display unit 110

Processing unit 120

Distance sensor 130

System bus

Eyepieces
140

Memory 150

Input unit 160

System for adjusting the
user interface 200

FIG. 1

System for adjusting the user
interface **200**

Determining module
**210**

Adjusting module
**220**

Display control module
**230**

FIG. 2

```
                        ┌─────────────┐
                        │    Start    │
                        └──────┬──────┘
                               │
                               ▼              301
           N            ╱────────────────╲
        ┌──────────────<  Is the HMD in the screen  >
        │               ╲  locked state currently? ╱
        │                ╲────────┬───────╲
        │                         │ Y
        │                         ▼                302
        │       ┌─────────────────────────────────────┐
        │       │ Detecting the distance between the  │
        │       │          HMD and the user           │
        │       └──────────────────┬──────────────────┘
        │                          │               303
        │                          ▼
        │       ┌─────────────────────────────────────┐
        │       │ Adjusting the user interface        │
        │       │ displayed according to the distance │
        │       │ detected and current state thereof  │
        │       └──────────────────┬──────────────────┘
        │                          │               304
        │                          ▼
        │       ┌─────────────────────────────────────┐
        │       │ Controlling the display unit to     │
        │       │ display the user interface adjusted │
        │       └──────────────────┬──────────────────┘
        │                          │
        └──────────────────────────┤
                                   ▼
                        ┌─────────────┐
                        │     End     │
                        └─────────────┘
```

FIG. 3

# INTERNATIONAL SEARCH REPORT

| | International application No. |
|---|---|
| | PCT/CN2016/109228 |

**A. CLASSIFICATION OF SUBJECT MATTER**

G06K 9/00 (2006.01) i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, EPODOC, WPI, CNKI, GOOGLE: 用户界面, 调整, 头戴显示设备, 距离, 感测, 检测, 锁屏, 锁定, 屏幕, 预设值, 阈值, interface, adjust, HMD, distance, sense, detect, lock, screen, threshold

**C. DOCUMENTS CONSIDERED TO BE RELEVANT**

| Category* | Citation of document, with indication, where appropriate, of the relevant passages | Relevant to claim No. |
|---|---|---|
| A | CN 105531716 A (MICROSOFT TECHNOLOGY LICENSING LLC) 27 April 2016 (27.04.2016), description, paragraphs [0002], [0035] and [0041]-[0044], and figure 5A | 1-15 |
| A | CN 104067160 A (GOOGLE INCORPORATION) 24 September 2014 (24.09.2014), entire document | 1-15 |
| A | CN 103984101 A (HUAWEI TECHNOLOGIES CO., LTD.) 23 August 2014 (23.08.2014), entire document | 1-15 |
| A | CN 103927966 A (BEIJING ZHIGU RUITUO TECHNOLOGY SERVICE CO., LTD.) 16 July 2014 (16.07.2014), entire document | 1-15 |
| A | CN 105593785 A (INTEL CORPORATION) 18 May 2016 (18.05.2016), entire document | 1-15 |

☒ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 July 2017 | 02 August 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer DONG, Xianbin Telephone No. (86-10) 62413988 |
|---|---|

Form PCT/ISA /210 (second sheet) (July 2009)

**INTERNATIONAL SEARCH REPORT**

| International application No. |
| --- |
| PCT/CN2016/109228 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | US 2002113755 A1 (SAMSUNG ELECTRONICS CO., LTD.) 22 August 2002 (22.08.2002), entire document | 1-15 |

Form PCT/ISA /210 (continuation of second sheet) (July 2009)

## INTERNATIONAL SEARCH REPORT
Information on patent family members

International application No.

PCT/CN2016/109228

| Patent Documents referred in the Report | Publication Date | Patent Family | Publication Date |
|---|---|---|---|
| CN 105531716 A | 27 April 2016 | US 2015035744 A1 | 05 February 2015 |
| | | WO 2015017291 A1 | 05 February 2015 |
| | | EP 3028216 A1 | 08 June 2016 |
| CN 104067160 A | 24 September 2014 | US 2013128364 A1 | 23 May 2013 |
| | | US 8611015 B2 | 17 December 2013 |
| | | WO 2013077978 A2 | 30 May 2013 |
| | | EP 2783252 A2 | 01 October 2014 |
| | | US 2014055846 A1 | 27 February 2014 |
| | | US 8786953 B2 | 22 July 2014 |
| CN 103984101 A | 23 August 2014 | CN 103984101 B | 24 August 2016 |
| CN 103927966 A | 16 July 2014 | CN 104598180 A | 06 May 2015 |
| | | WO 2015149557 A1 | 08 October 2015 |
| CN 105593785 A | 18 May 2016 | WO 2015065478 A1 | 07 May 2015 |
| | | US 2015338914 A1 | 26 November 2015 |
| | | EP 3063602 A1 | 07 September 2016 |
| US 2002113755 A1 | 22 August 2002 | US 7193584 B2 | 20 March 2007 |
| | | KR 20020067948 A | 24 August 2002 |
| | | KR 100406945 B1 | 28 November 2003 |

Form PCT/ISA/210 (patent family annex) (July 2009)